# EUROPÄISCHE PATENTSCHRIFT

(11) **EP 3 769 853 B1**
(45) Veröffentlichungstag und Bekanntmachung des Hinweises auf die Patenterteilung: **05.04.2023**
(21) Anmeldenummer: 20186877.5
(22) Anmeldetag: 21.07.2020
(51) Int. Cl.: B05B 16/60

(54) **BESCHICHTUNGSVORRICHTUNG ZUM BESCHICHTEN EINES WERKSTÜCKS MIT EINER WASSERVERDÜNNBAREN FARBE UND VERFAHREN ZUM BETRIEB EINER DERARTIGEN VORRICHTUNG**
COATING DEVICE FOR COATING A WORKPIECE WITH A WATER-DILUTABLE PAINT AND METHOD FOR OPERATING SUCH A DEVICE
DISPOSITIF DE REVÊTEMENT DESTINÉ AU REVÊTEMENT D'UNE PIÈCE DE TRAVAIL À L'AIDE D'UNE PEINTURE DILUABLE DANS L'EAU ET PROCÉDÉ DE FONCTIONNEMENT D'UN TEL DISPOSITIF

(30) Priorität: 26.07.2019 DE 102019211164
(43) Veröffentlichungstag der Anmeldung: 27.01.2021
(73) Patentinhaber: Josef Schiele oHG, 56651 Niederzissen (DE)
(72) Erfinder: SCHIELE, Stefan, 56651 Niederzissen (DE)
(74) Vertreter: Prescher, Gordian

(56) Entgegenhaltungen:
- WO-A1-2016/171723
- DE-A1-102013 103 321
- DE-A1-102017 101 630
- GB-A- 2 015 384
- GB-A- 2 450 231
- US-A- 5 454 256

## Beschreibung

Die Erfindung betrifft eine Beschichtungsvorrichtung zum Beschichten eines Werkstücks mit einem wasserbasierten Lack sowie ein Verfahren zum Betrieb einer derartigen Beschichtungsvorrichtung. Eine derartige Beschichtungsvorrichtung ist durch das Dokument DE102013103321A1 bekannt.

Beim Beschichten von Werkstücken mit derartigen Beschichtungsvorrichtungen strömt typischerweise Umgebungsluft aus einer Umgebung der Beschichtungsvorrichtung in die Beschichtungsvorrichtung, insbesondere in eine Applikationskammer der Beschichtungsvorrichtung, ein. Die einströmende Umgebungsluft hat dabei das Bestreben, dem in der Beschichtungsvorrichtung verwendeten wasserbasierten Lack Feuchtigkeit zu entziehen. Hierdurch erhöht sich die die Viskosität des Lacks, was zu einem unerwünschten Trocknen des Lacks innerhalb der Beschichtungsvorrichtung führen kann.

Vor diesem Hintergrund stellt sich die Aufgabe, die Gefahr eines unerwünschten Trocknen des Lacks innerhalb der Beschichtungsvorrichtung zu reduzieren.

Zur Lösung der Aufgabe wird ein Verfahren zum Betrieb einer Beschichtungsvorrichtung zum Beschichten eines Werkstücks mit einem wasserbasierten Lack nach Anspruch 1 vorgeschlagen.

Bei dem erfindungsgemäßen Verfahren strömt Umgebungsluft in die Beschichtungsvorrichtung, insbesondere in die Applikationskammer, ein. Innerhalb der Beschichtungsvorrichtung kann die Luft dem wasserbasierten Lack Wasser entziehen, wodurch sich die Viskosität des Lacks erhöhen kann. Um einem übermäßigen Entzug von Wasser und damit einer zu hohen Viskosität vorzubeugen, wird der Taupunkt in der Beschichtungsvorrichtung, insbesondere in der Applikationskammer, ermittelt. Der Taupunkt gibt für einen vorgegebenen Luftdruck diejenige Temperatur an, die unterschritten werden muss, damit Wasser aus der Luft kondensieren kann und ist ein Maß für die absolute Luftfeuchtigkeit. Erfindungsgemäß wird zur Aufrechterhaltung einer geringen Viskosität des wasserbasierten Lacks die Umgebungsluft in Abhängigkeit von dem ermittelten Taupunkt befeuchtet. Durch das Befeuchten der Umgebungsluft kann der Taupunkt in der Beschichtungsvorrichtung erhöht werden. Die Mindest-Verarbeitungstemperatur stellt diejenige Temperatur dar, welche der Lack mindestens annehmen muss, um problemfrei auf das Werkstück aufgebracht werden zu können. Um eine solches problemfreies Aufbringen des Lacks zu ermöglichen, wird die Umgebungsluft derart befeuchtet, dass der Taupunkt immer oberhalb der Mindest-Verarbeitungstemperatur des Lacks liegt.

Unter einem wasserbasierten Lack wird im Sinne der Erfindung ein Lack verstanden, der als Lösungsmittel Wasser aufweist. Sobald dieses Lösemittel zumindest teilweise verdampft oder verdunstet, steigt die Viskosität an, bis der Lack härtet bzw. trocknet. Das Beschichten des Werkstücks mit dem wasserbasierten Lack kann in einer Applikationskammer, insbesondere mittels eines Beschichtungskopfes, erfolgen. Dabei kann das Werkstück relativ zu der Beschichtungsvorrichtung, insbesondere relativ zu der Applikationskammer, bewegt werden.

Die Umgebungsluft wird unabhängig von einer messtechnischen Bestimmung der Viskosität befeuchtet. Es ist bei dem vorliegenden Verfahren nicht erforderlich, die Viskosität des wasserbasierten Lacks durch eine Messung zu bestimmen, um die Befeuchtung der Umgebungsluft zu steuern.

Gemäß einer vorteilhaften Ausgestaltung des erfindungsgemäßen Verfahrens wird der Taupunkt mittels eines Taupunktsensors ermittelt. Als Taupunktsensor kann beispielsweise ein Taupunkspiegelhygrometer verwendet werden.

Gemäß einer alternativen, vorteilhaften Ausgestaltung ist vorgesehen, dass eine Lufttemperatur und eine relative Luftfeuchtigkeit und optional ein in der Applikationskammer vorliegender Ist-Druck (Atmosphärendruck minus anliegenden Unterdruck) gemessen werden und der Taupunkt in Abhängigkeit von der gemessenen Lufttemperatur und der gemessenen Luftfeuchtigkeit und optional dem in der Applikationskammer vorliegenden Ist-Druck ermittelt wird. Die Messung der Lufttemperatur kann mittels eines Temperatursensors und die Messung der Luftfeuchtigkeit mittels eines Luftfeuchtigkeitssensors, insbesondere eines kapazitiven oder resistiven Luftfeuchtigkeitssensors, erfolgen.

Eine vorteilhafte Ausgestaltung des erfindungsgemäßen Verfahrens sieht vor, dass der Lack in der Beschichtungsvorrichtung in Abhängigkeit von dem ermittelten Taupunkt gekühlt wird. Durch das Kühlen des Lacks in der Beschichtungsvorrichtung kann das Kondensieren gefördert und/oder die Aufnahme von Wasser aus dem Lack in die Luft verringert werden. Bevorzugt wird der Lack derart gekühlt, dass er den Taupunkt erreicht, besonders bevorzugt unterschreitet. Das Kühlen des Lacks kann in einem Lackreservoir und/oder in einer Zuleitung und/oder in einer Wand der Applikationskammer und/oder in einer Ableitung für den Lack erfolgen. Vorteilhaft ist es, wenn zum Kühlen des Lacks ein Kühlmittel, beispielsweise eine Kühlflüssigkeit, auf eine vorgegebene Kühltemperatur verbracht wird. Das Kühlmittel kann durch Kühlleitungen der Beschichtungsvorrichtung geleitet werden, um die Beschichtungsvorrichtung zu Kühlen, insbesondere in einem Lackreservoir und/oder in einer Zuleitung und/oder in einer Wand der Applikationskammer und/oder in einer Ableitung für den Lack.

Als vorteilhaft hat sich eine Ausgestaltung der Erfindung erwiesen, bei welcher die Umgebungsluft derart befeuchtet wird, dass der wasserbasierte Lack auf eine Temperatur gekühlt werden kann, die größer ist als die Mindest-Verarbeitungstemperatur des Lacks. Somit kann durch das Befeuchten der in die Beschichtungsvorrichtung eingebrachten Umgebungsluft das Kühlen des Lacks in der Beschichtungsvorrichtung auf eine erhöhte Temperatur erfolgen, wobei trotzdem die Aufnahme von Wasser aus dem Lack in die Luft verringert bzw. vermieden wird.

Vorteilhaft ist es, wenn der Lack in der Beschichtungsvorrichtung in Abhängigkeit von einer vorgegebenen Mindest-Verarbeitungstemperatur des Lacks gekühlt wird. Bevorzugt erfolgt das Kühlen des Lacks in der Beschichtungsvorrichtung nur dann, wenn der ermittelte Taupunkt über der vorgegebenen Mindest-Verarbeitungstemperatur des Lacks liegt. Hierdurch kann sichergestellt werden, dass die Temperatur des Lacks in der Beschichtungsvorrichtung nicht unter die Mindest-Verarbeitungstemperatur sinkt.

Nach einer vorteilhaften Ausgestaltung eines nicht von der Erfindung abgedeckten Verfahrens ist vorgesehen, dass eine Viskosität des Lacks ermittelt wird und der Lack in der Beschichtungsvorrichtung in Abhängigkeit von der ermittelten Viskosität gekühlt wird. Das Ermitteln der Viskosität ist insbesondere dann von Vorteil, wenn die Umgebungsluft in der Umgebung der Beschichtungsvorrichtung durch von der Beschichtungseinrichtung unabhängige, weitere Absauganlagen abgesaugt wird. In einem solchen Anwendungsfall gelangt die durch das Befeuchten der Umgebungsluft eingebrachte Wassermenge nicht nur in die Beschichtungsvorrichtung, so dass die Luftfeuchtigkeit in der Beschichtungsvorrichtung absinken und damit die Viskosität des Lacks ansteigen kann. Ein solcher Viskositätsanstieg kann durch das Ermitteln der Viskosität festgestellt werden. Zur Ermittlung der Viskosität kann die Beschichtungsvorrichtung ein Viskosimeter, insbesondere ein Rotationsviskosimeter oder ein Quarzviskosimeter, aufweisen. Alternativ kann zur Ermittlung der Viskosität ein anderes geeignetes Messsystem eingesetzt werden. Das Ermitteln der Viskosität des Lacks kann in einem Lackreservoir, in einer Zuführleitung für den Lack oder in einer Abführleitung für den Lack vorgesehen sein. Alternativ kann das Ermitteln der Viskosität des Lacks in einer separaten Messvorrichtung durchführbar sein, wobei der Messvorrichtung eine vorgegebene Menge des Lacks aus der Beschichtungsvorrichtung, insbesondere aus einem Lackkreislauf der Beschichtungsvorrichtung, entnimmt und mit einem definierten Druck zurück in die Beschichtungsvorrichtung, insbesondere in den Lackkreislauf, fördert und die Viskosität in Abhängigkeit von einer gemessenen Abdrückzeit ermittelt.

Durch die Anhebung des Taupunktes der Umgebungsluft über die Mindestverarbeitungstemperatur des Lackes kann der Temperaturbereich in dem der Lack verarbeitet wird, sehr stark eingegrenzt werden. Dies hat den Vorteil, dass bei der Betrachtung der Viskosität des Lackes keine große Differenzen auf Grund von unterschiedlichen Temperaturen des Lackes berücksichtigt werden müssen, was einen weiteren Vorteil für die Prozesssicherheit der Lackierung darstellt.

Gemäß einer bevorzugten Ausgestaltung der Erfindung ist vorgesehen, dass die Umgebungsluft vor dem Einströmen außerhalb der Beschichtungsvorrichtung, insbesondere außerhalb der Applikationskammer, befeuchtet wird. Hierzu kann eine Luftbefeuchtungseinrichtung in der Umgebung der Beschichtungsvorrichtung oder an der Außenkontur der Beschichtungsvorrichtung angeordnet sein.

Alternativ oder zusätzlich kann die eingeströmte Umgebungsluft innerhalb der Beschichtungsvorrichtung, insbesondere innerhalb der Applikationskammer, befeuchtet werden. Bei einer derartigen Ausgestaltung kann eine Luftbefeuchtungseinrichtung innerhalb der Beschichtungsvorrichtung oder als Teil der Beschichtungsvorrichtung vorgesehen sein, und eine Befeuchtung der Luft innerhalb der Beschichtungsvorrichtung, insbesondere innerhalb der Applikationskammer, bewirken. Weiter alternativ ist es möglich, dass die eingeströmte Umgebungsluft innerhalb der Beschichtungsvorrichtung in einer um die Applikationskammer herum angeordneten, größeren Kammer befeuchtet wird. Nur in dieser größeren Kammer muss die Luftfeuchtigkeit entsprechend hoch sein und die durch die Applikationskammer abgesaugte Luft kann über einen separaten Lüfter mit der notwendigen Luftfeuchtigkeit und optional Lufttemperatur (Klimatisierung) in dieser größeren Kammer ersetzt werden. Der zusätzliche Lüfter fördert abhängig von der Größe der größeren Kammer und der Öffnungsquerschnitte eine größere Luftmenge in diese größere Kammer, so dass dort ein gewisser Überdruck entsteht.

Konstruktiv vorteilhaft ist es, wenn zur Förderung des Einströmens der Umgebungsluft in die Beschichtungsvorrichtung ein Unterdruck in der Beschichtungsvorrichtung, insbesondere in der Applikationskammer, erzeugt wird. Zur Erzeugung des Unterdrucks kann die Beschichtungsvorrichtung eine Pumpe, insbesondere eine Vakuumpumpe, aufweisen. Über die Einstellung des Unterdrucks ist es möglich, Einfluss auf die Schichtdicke des auf das Werkstück aufgetragenen Lacks zu nehmen. Beispielsweise wird durch eine Erhöhung des Unterdrucks die Schichtdicke verringert.

Zur Lösung eingangs genannter Aufgabe wird ferner eine Beschichtungsvorrichtung zum Beschichten eines Werkstücks einem wasserbasierten Lack nach Anspruch 10 vorgeschlagen.

Bei der Beschichtungsvorrichtung können dieselben Vorteile erreicht werden, wie sie bereits im Zusammenhang mit dem Verfahren zum Betrieb einer Beschichtungsvorrichtung beschrieben worden sind.

Bevorzugt umfasst die Beschichtungsvorrichtung eine erste Steuereinrichtung, die mit der Befeuchtungseinrichtung verbunden ist und dazu eingerichtet ist, die Befeuchtungseinrichtung in Abhängigkeit von dem ermittelten Taupunkt zu steuern.

Gemäß einer vorteilhaften Ausgestaltung umfasst die Beschichtungsvorrichtung eine zweite Steuereinrichtung, die mit einem Viskosimeter zur Ermittlung der Viskosität des Lacks verbunden ist und dazu eingerichtet ist, eine Kühlvorrichtung in Abhängigkeit von der ermittelten Viskosität zu steuern.

Wenn die Beschichtungsvorrichtung eine Applikationskammer aufweist, kann sich um den Bereich der Applikationskammer herum eine zusätzliche größere Kammer befinden. Nur in dieser größeren Kammer muss die Luftfeuchtigkeit entsprechend hoch sein und die durch die Applikationskammer abgesaugte Luft kann über einen separaten Lüfter mit der notwendigen Luftfeuchtigkeit und optional Lufttemperatur (Klimatisierung) in dieser größeren Kammer ersetzt werden. Der zusätzliche Lüfter fördert abhängig von der Größe der größeren Kammer und der Öffnungsquerschnitte eine größere Luftmenge in diese größere Kammer, so das dort ein gewisser Überdruck entsteht. Alternativ kann vorgesehen sein, dass die Beschichtungsvorrichtung dazu eingerichtet ist kein Luftgemisch durch die Anlage zu fördern. Beispielsweise kann vorgesehen sein, dass die Beschichtungsvorrichtung dazu eingerichtet ist, ein reines Stickstoffgemisch in die äußere Kammer zu fördern und damit den Einfluss von Wasser aus der Prozessluft komplett zu eliminieren.

Weitere Einzelheiten und Vorteile der Erfindung sollen nachfolgend anhand der in den Figuren gezeigten Ausführungsbeispiele erläutert werden. Hierin zeigt:

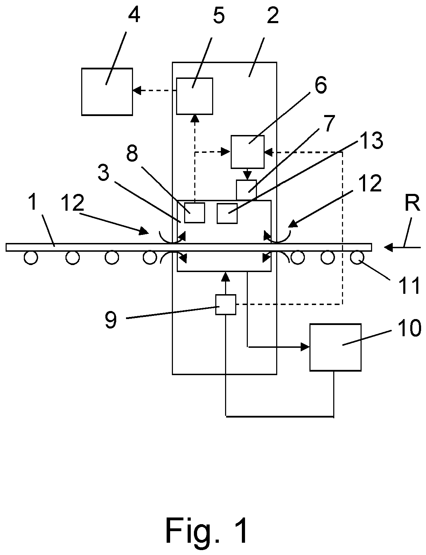

- Fig. 1: ein Ausführungsbeispiel einer Beschichtungsvorrichtung gemäß der Erfindung in einer schematischen Darstellung.

In der **Fig. 1** ist ein Ausführungsbeispiel einer Beschichtungsvorrichtung 2 zum Beschichten eines Werkstücks 1 mit einem wasserbasierten Lack gezeigt. Das Werkstück 1 wird während des Beschichtens mit der Beschichtungsvorrichtung 2 durch eine Werkstück-Fördereinrichtung 11 in einer Förderrichtung R durch die Beschichtungsvorrichtung 2, insbesondere eine Applikationskammer 3 der Beschichtungsvorrichtung 2, bewegt. Aus einem Lackreservoir 10 wird wasserbasierter Lack, beispielsweise mittels einer Pumpe, in die Applikationskammer 3 der Beschichtungsvorrichtung 2 gefördert und dort auf das Werkstück 1 appliziert. Überschüssiger Lack wird in der Beschichtungsvorrichtung 2 aufgefangen und in das Lackreservoir 10 zurückgeführt.

Die Beschichtungsvorrichtung 2 umfasst ferner eine Vorrichtung 13 zur Erzeugung eines Unterdrucks in der Beschichtungsvorrichtung 2, hier in der Applikationskammer 3. Diese Vorrichtung 13 kann beispielsweise als Vakuumpumpe ausgestaltet sein. Die Vorrichtung 13 erzeugt innerhalb der Beschichtungsvorrichtung 2 einen Unterdruck. Die Beschichtungsvorrichtung 2 weist mehrere Öffnungen 12 auf, durch welche das Werkstück 1 in die Beschichtungsvorrichtung 2 eintreten kann. Diese Öffnungen schließen nicht dicht mit dem sich bewegenden Werkstück 1, so dass aufgrund des innerhalb der Beschichtungsvorrichtung 2 erzeugten Unterdrucks Umgebungsluft bzw. Luft aus einer die Applikationskammer 3 umgebenden größeren Kammer durch diese Öffnungen 12 in die Beschichtungsvorrichtung 2 gesaugt wird.

Die in die Beschichtungsvorrichtung 2 eingesaugte Umgebungsluft entzieht dem wasserbasierten Lack kontinuierlich Wasser, so dass die Viskosität des Lacks ansteigt und eine unerwünschte Verfestigung des Lacks, beispielsweise innerhalb der Applikationskammer 3 zu befürchten ist. Um einer solchen unerwünschten Verfestigung des Lacks entgegenzuwirken sind bei der Beschichtungsvorrichtung 2 besondere Maßnahmen getroffen. Zum einen umfasst die Beschichtungsvorrichtung eine erste Steuereinrichtung 5, die dazu eingerichtet ist, einen Taupunkt in der Beschichtungsvorrichtung 2, insbesondere in der Applikationskammer 3, zu ermitteln, und zum anderen weist die Beschichtungsvorrichtung 2 eine Luftbefeuchtungseinrichtung 4 zur Befeuchtung der Umgebungsluft in Abhängigkeit von dem ermittelten Taupunkt auf. Bevorzugt liegt dieser oberhalb der Mindestverarbeitungstemperatur des Lacks.

Bei dem Ausführungsbeispiel ist die erste Steuereinrichtung 5 mit einem Taupunktsensor 8 verbunden, der den Taupunkt in der Applikationskammer 3 messtechnisch erfasst und entsprechende Messdaten an die erste Steuereinheit 5 weiterleitet. Anhand dieser Messdaten kann die erste Steuereinheit 5 die Luftbefeuchtungseinrichtung 4 ansteuern, die in der Umgebung der Beschichtungseinrichtung 2 außerhalb der Beschichtungseinrichtung 2 angeordnet ist. Somit wird durch die Luftbefeuchtungseinrichtung 4 die Umgebungsluft vor deren Eintritt in die Beschichtungsvorrichtung 2 befeuchtet, d.h. mit Wasser, insbesondere Wasserdampf, angereichert, Insbesondere derart dass die Temperatur der Umgebungsluft über der Mindestverarbeitungstemperatur des Lackes liegt.

Gemäß einer alternativen Ausgestaltung kann die Beschichtungsvorrichtung 2 anstelle des Taupunktsensors 8 einen Temperatursensor und einen Luftfeuchtigkeitssensor aufweisen. Die Messdaten dieser Sensoren können an die erste Steuereinheit 5 übermittelt werden, so dass die erste Steuereinheit 5 in Abhängigkeit von der gemessenen relativen Luftfeuchtigkeit und der Temperatur den Taupunkt ermittelt.

Zusätzlich zu der Befeuchtung der Umgebungsluft wird der Lack in der Beschichtungsvorrichtung 2 in Abhängigkeit von dem ermittelten Taupunkt gekühlt. Zum Kühlen des Lacks umfasst die Beschichtungsvorrichtung 2 eine Kühleinrichtung 7. Die Kühleinrichtung 7 kann ein Kühlmedium umfassen, welches durch Wandungen der Beschichtungseinrichtung 2, beispielweise eine Wandung der Applikationskammer 3 und/oder eine Wandung des Lackreservoirs 10, geleitet wird und dabei den wasserbasierten Lack indirekt kühlt. Zur Steuerung der Kühleinrichtung 7 ist eine zweite Steuereinheit 6 vorgesehen. Dieser zweiten Steuereinheit 6 werden unter anderem die Messdaten des Taupunktsensors 8 zugeführt, so dass der Taupunkt auch in der zweiten Steuereinheit bekannt ist. Alternativ können der zweiten Steuereinheit 6 zur Ermittlung des Taupunkts Messdaten der relativen Luftfeuchtigkeit und der Temperatur zugeführt werden.

Als weiteren Sensor umfasst die Beschichtungsvorrichtung 2 ein Viskosimeter 9. Das Viskosimeter 9 ist in direktem Kontakt mit dem wasserbasierten Lack und bestimmt messtechnisch die Viskosität des Lacks. Das Viskosimeter kann, wie in Fig. 1 gezeigt in einer Zuführleitung zwischen dem Lackreservoir 10 und der Applikationskammer 3 angeordnet sein. Alternativ sind andere Anordnungen denkbar, beispielsweise innerhalb des Lackreservoir 10 oder in einer Leitung Abführleitung, über welche überflüssiger Lack aus der Applikationskammer 3 zurück in das Lackreservoir 10 geleitet wird.

Zum Betrieb der Beschichtungsvorrichtung 2 kommt ein Verfahren zum Einsatz, wobei Umgebungsluft aus der Umgebung der Beschichtungsvorrichtung 2 in die Beschichtungsvorrichtung 2, insbesondere in die Applikationskammer 3, einströmt, der Taupunkt in der Beschichtungsvorrichtung 2, insbesondere in der Applikationskammer 3, ermittelt wird, und die Umgebungsluft außerhalb der Beschichtungsvorrichtung 2 in Abhängigkeit von dem ermittelten Taupunkt derart befeuchtet wird, dass sich ein Taupunkt oberhalb einer Mindest-Verarbeitungstemperatur des wasserbasierten Lacks einstellt. Hierdurch kann die Gefahr eines unerwünschten Trocknen des Lacks innerhalb der Beschichtungsvorrichtung 2 reduziert bzw. komplett verhindert werden. Die Befeuchtung der Umgebungsluft erfolgt dabei unabhängig von der messtechnischen Bestimmung der Viskosität durch das Viskosimeter 9.

Durch das Befeuchten der Umgebungsluft wird der Taupunkt in der Beschichtungsvorrichtung 2 erhöht. Durch die von der ersten Steuereinheit 5 unabhängige, zweite Steuereinheit 6 wird die Kühleinrichtung 7 derart gesteuert, dass der wasserbasierte Lack auf eine Temperatur gekühlt wird, die größer ist als die Mindest-Verarbeitungstemperatur des Lacks. Dabei erfolgt die Einstellung der Kühltemperatur der Kühleinrichtung in Abhängigkeit von dem ermittelten Taupunkt und in Abhängigkeit von der ermittelten Viskosität. Das Ermitteln der Viskosität zur Einstellung der Kühltemperatur ist insbesondere dann von Vorteil, wenn die Umgebungsluft in der Umgebung der Beschichtungsvorrichtung durch von der Beschichtungseinrichtung 2 unabhängige, weitere Absauganlagen abgesaugt wird. In einem solchen Anwendungsfall gelangt die durch das Befeuchten der Umgebungsluft eingebrachte Wassermenge nicht nur in die Beschichtungsvorrichtung 2, so dass die Luftfeuchtigkeit in der Beschichtungsvorrichtung 2 absinken und damit die Viskosität des Lacks ansteigen kann. Ein solcher Viskositätsanstieg kann durch das Ermitteln der Viskosität mittels des Viskosimeters 9 festgestellt werden. Zum Verringern des Viskositätsanstiegs kann mittels der zweiten Steuereinheit 6 die Kühltemperatur der Kühleinrichtung 7 erniedrigt werden.

### Bezugszeichen:

- 1: Werkstück
- 2: Beschichtungsvorrichtung
- 3: Applikationskammer
- 4: Luftbefeuchtungseinrichtung
- 5: Steuereinheit
- 6: Steuereinheit
- 7: Kühleinrichtung
- 8: Taupunktsensor
- 9: Viskosimeter
- 10: Lackreservoir
- 11: Werkstück-Fördereinrichtung
- 12: Öffnung
- 13: Vorrichtung zur Erzeugung eines Unterdrucks
- R: Förderrichtung

## Patentansprüche

1. Verfahren zum Betrieb einer Beschichtungsvorrichtung (2) zum Beschichten eines Werkstücks (1) mit einem wasserbasierten Lack, wobei das Werkstück (1) während des Beschichtens durch eine Werkstück-Fördereinrichtung (11) in einer Förderrichtung R durch die Beschichtungsvorrichtung (2) bewegt wird, wobei Umgebungsluft aus einer Umgebung der Beschichtungsvorrichtung (2) in die Beschichtungsvorrichtung (2), insbesondere in eine Applikationskammer (3) der Beschichtungsvorrichtung (2), einströmt, wobei ein Taupunkt in der Beschichtungsvorrichtung (2), insbesondere in der Applikationskammer (3), ermittelt wird, und wobei die Umgebungsluft in Abhängigkeit von dem ermittelten Taupunkt derart befeuchtet wird, dass sich ein Taupunkt oberhalb einer Mindest-Verarbeitungstemperatur des wasserbasierten Lacks einstellt, wobei die Umgebungsluft unabhängig von einer messtechnischen Bestimmung der Viskosität des Lacks befeuchtet wird.

2. Verfahren nach Anspruch 1, **dadurch gekennzeichnet, dass** der Taupunkt mittels eines Taupunktsensors (8), insbesondere mittels eines Taupunktspiegelhygrometers, ermittelt wird.

3. Verfahren nach Anspruch 1, **dadurch gekennzeichnet, dass** eine Lufttemperatur und eine relative Luftfeuchtigkeit gemessen werden und der Taupunkt in Abhängigkeit von der gemessenen Lufttemperatur und der gemessenen Luftfeuchtigkeit ermittelt wird.

4. Verfahren nach einem der vorhergehenden Ansprüche, **dadurch gekennzeichnet, dass** der Lack in der Beschichtungsvorrichtung (2) in Abhängigkeit von dem ermittelten Taupunkt gekühlt wird.

5. Verfahren nach einem der vorhergehenden Ansprüche, **dadurch gekennzeichnet, dass** die Umgebungsluft derart befeuchtet wird, dass der wasserbasierte Lack auf eine Temperatur gekühlt werden kann, die größer ist als die Mindest-Verarbeitungstemperatur des Lacks.

6. Verfahren nach einem der vorhergehenden Ansprüche, **dadurch gekennzeichnet, dass** der Lack in der Beschichtungsvorrichtung (2) in Abhängigkeit von einer vorgegebenen Mindest-Verarbeitungstemperatur des Lacks gekühlt wird.

7. Verfahren nach einem der vorhergehenden Ansprüche, **dadurch gekennzeichnet, dass** die Umgebungsluft vor dem Einströmen außerhalb der Beschichtungsvorrichtung (2), insbesondere außerhalb der Applikationskammer (3), befeuchtet wird.

8. Verfahren nach einem der der vorhergehenden Ansprüche, **dadurch gekennzeichnet, dass** die eingeströmte Umgebungsluft innerhalb der Beschichtungsvorrichtung (2), insbesondere innerhalb der Applikationskammer (3) oder in einer um die Applikationskammer (3) herum angeordneten, größeren Kammer, befeuchtet wird.

9. Verfahren nach einem der vorhergehenden Ansprüche, **dadurch gekennzeichnet, dass** zur Förderung des Einströmens der Umgebungsluft in die Beschichtungsvorrichtung ein Unterdruck in der Beschichtungsvorrichtung (2), insbesondere in der Applikationskammer (3), erzeugt wird.

10. Beschichtungsvorrichtung zum Beschichten eines Werkstücks (1) mit einem wasserbasierten Lack, mit
- einer Vorrichtung (13) zur Erzeugung eines Unterdrucks in der Beschichtungsvorrichtung, insbesondere in einer Applikationskammer der Beschichtungsvorrichtung,
- einer Werkstück-Fördereinrichtung (11) mittels der das Werkstück (1) während des Beschichtens in einer Förderrichtung R durch die Beschichtungsvorrichtung (2) bewegt wird,
- mehreren Öffnungen (12) durch welche Umgebungsluft aus einer Umgebung der Beschichtungsvorrichtung (2) in die Beschichtungsvorrichtung (2), insbesondere in die Applikationskammer (3), einströmen kann und durch welche das Werkstück (1) in die Beschichtungsvorrichtung (2) eintreten kann,
- einer Steuereinrichtung (5), die dazu eingerichtet ist, einen Taupunkt in der Beschichtungsvorrichtung (2), insbesondere in der Applikationskammer (3), zu ermitteln, und
- einer Luftbefeuchtungseinrichtung (4) zur Befeuchtung der Umgebungsluft in Abhängigkeit von dem ermittelten Taupunkt und unabhängig von einer messtechnischen Bestimmung der Viskosität des Lacks, so dass sich ein Taupunkt oberhalb einer Mindest-Verarbeitungstemperatur des wasserbasierten Lacks einstellt.

## Claims

1. Method for operating a coating apparatus (2) for coating a workpiece (1) with a water-based lacquer, wherein the workpiece (1) is moved through the coating apparatus (2) in a conveying direction R by a workpiece conveying device (11) during the coating operation, wherein ambient air from a surrounding area of the coating apparatus (2) flows into the coating apparatus (2), in particular into an application chamber (3) of the coating apparatus (2), wherein a dew point in the coating apparatus (2), in particular in the application chamber (3), is ascertained, and wherein the ambient air is humidified depending on the ascertained dew point in such a way that a dew point above a minimum processing temperature of the water-based lacquer is set, wherein the ambient air is humidified independently of a determination of the viscosity of the lacquer by measuring instrumentation.

2. Method according to Claim 1, **characterized in that** the dew point is ascertained by means of a dew point sensor (8), in particular by means of a dew-point chilled mirror hygrometer.

3. Method according to Claim 1, **characterized in that** an air temperature and a relative air humidity are measured and the dew point is ascertained depending on the measured air temperature and the measured air humidity.

4. Method according to one of the preceding claims, **characterized in that** the lacquer is cooled in the coating apparatus (2) depending on the ascertained dew point.

5. Method according to one of the preceding claims, **characterized in that** the ambient air is humidified in such a way that the water-based lacquer can be cooled to a temperature that is higher than the minimum processing temperature of the lacquer.

6. Method according to one of the preceding claims, **characterized in that** the lacquer is cooled in the coating apparatus (2) depending on a predefined minimum processing temperature of the lacquer.

7. Method according to one of the preceding claims, **characterized in that**, before it flows in, the ambient air is humidified outside the coating apparatus (2), in particular outside the application chamber (3).

8. Method according to one of the preceding claims, **characterized in that** the ambient air that has flowed in is humidified inside the coating apparatus (2), in particular inside the application chamber (3) or in a larger chamber arranged around the application chamber (3) .

9. Method according to one of the preceding claims, **characterized in that** a negative pressure is generated in the coating apparatus (2), in particular in the application chamber (3), to convey the inflow of ambient air into the coating apparatus.

10. Coating apparatus for coating a workpiece (1) with a water-based lacquer, having
- an apparatus (13) for generating a negative pressure in the coating apparatus, in particular in an application chamber of the coating apparatus,
- a workpiece conveying device (11), by means of which the workpiece (1) is moved through the coating apparatus (2) in a conveying direction R during the coating operation,
- multiple openings (12), through which ambient air from a surrounding area of the coating apparatus (2) can flow into the coating apparatus (2), in particular into the application chamber (3), and through which the workpiece (1) can enter the coating apparatus (2),
- a control device (5) designed to ascertain a dew point in the coating apparatus (2), in particular in the application chamber (3), and
- an air humidification device (4) for humidifying the ambient air depending on the ascertained dew point and independently of a determination of the viscosity of the lacquer by measuring instrumentation, with the result that a dew point above a minimum processing temperature of the water-based lacquer is set.

## Revendications

1. Procédé de fonctionnement d'un dispositif de revêtement (2) destiné à revêtir une pièce (1) avec une peinture à l'eau, la pièce (1) étant déplacée à travers le dispositif de revêtement (2) pendant le revêtement par un module de transport de pièces (11) dans une direction de transport R, l'air environnant s'écoulant d'une zone d'environnement du dispositif de revêtement (2) jusque dans le dispositif de revêtement (2), en particulier jusque dans une chambre d'application (3) du dispositif de revêtement (2), un point de rosée étant déterminé dans le dispositif de revêtement (2), en particulier dans la chambre d'application (3), et l'air environnant étant humidifié en fonction du point de rosée déterminé de manière à régler un point de rosée au-dessus d'une température de traitement minimale de la peinture à l'eau, l'air environnant étant humidifié indépendamment d'une détermination métrologique de la viscosité de la peinture.

2. Procédé selon la revendication 1, **caractérisé en ce que** le point de rosée est déterminé au moyen d'un capteur de point de rosée (8), notamment au moyen d'un hygromètre à miroir de point de rosée.

3. Procédé selon la revendication 1, **caractérisé en ce qu'**une température de l'air et une humidité relative de l'air sont mesurées et le point de rosée est déterminé en fonction de la température de l'air mesurée et de l'humidité de l'air mesurée.

4. Procédé selon l'une des revendications précédentes, **caractérisé en ce que** la peinture est refroidie dans le dispositif de revêtement (2) en fonction du point de rosée déterminé.

5. Procédé selon l'une des revendications précédentes, **caractérisé en ce que** l'air environnant est humidifié de manière à pouvoir refroidir la peinture à l'eau à une température supérieure à la température de traitement minimale de la peinture.

6. Procédé selon l'une des revendications précédentes, **caractérisé en ce que** la peinture dans le dispositif de revêtement (2) est refroidie en fonction d'une température de traitement minimale spécifiée de la peinture.

7. Procédé selon l'une des revendications précédentes, **caractérisé en ce que** l'air environnant est humidifié avant d'entrer à l'extérieur du dispositif de revêtement (2), notamment à l'extérieur de la chambre d'application (3).

8. Procédé selon l'une des revendications précédentes, **caractérisé en ce que** l'air environnant entrant est humidifié à l'intérieur du dispositif de revêtement (2), notamment à l'intérieur de la chambre d'application (3) ou dans une chambre plus grande disposée autour de la chambre d'application (3).

9. Procédé selon l'une des revendications précédentes, **caractérisé en ce que**, pour favoriser l'entrée de l'air environnant dans le dispositif de revêtement, une dépression est générée dans le dispositif de revêtement (2), notamment dans la chambre d'application (3).

10. Dispositif de revêtement destiné à revêtir une pièce (1) avec une peinture à l'eau, ledit dispositif comprenant
- un dispositif (13) destiné à générer une dépression dans le dispositif de revêtement, en particulier dans une chambre d'application du dispositif de revêtement,
- un module de transport de pièces (11) au moyen duquel la pièce (1) est déplacée à travers le dispositif de revêtement (2) pendant le revêtement dans une direction de transport R,
- une pluralité d'ouvertures (12) par lesquelles l'air environnant peut s'écouler d'un environnement du dispositif de revêtement (2) jusque dans le dispositif de revêtement (2), en particulier jusque dans la chambre d'application (3), et par lesquelles la pièce (1) peut entrer dans le dispositif de revêtement (2),
- un module de commande (5) qui est conçu pour déterminer un point de rosée dans le dispositif de revêtement (2), en particulier dans la chambre d'application (3), et
- un module d'humidification de l'air (4) destiné à humidifier l'air environnant en fonction du point de rosée déterminé et indépendamment d'une détermination métrologique de la viscosité de la peinture de façon à régler un point de rosée au-dessus d'une température de traitement minimale de la peinture à l'eau.
